# EUROPEAN PATENT APPLICATION

(11) **EP 4 611 078 A1**
(43) Date of publication of application: **03.09.2025**
(21) Application number: 25152016.9
(22) Date of filing: 15.01.2025
(51) Int. Cl.: H01M 8/0258, C01B 3/04

(54) **CURRENT COLLECTOR AND ELECTROCHEMICAL CELL STACK**

(30) Priority: 29.02.2024 JP 2024029778
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: Sato, Yosuke, Kawasaki-shi, Kanagawa (JP); Osada, Norikazu, Kawasaki-shi, Kanagawa (JP)
(74) Representative: Hoffmann Eitle

(57) **Abstract**

A current collector includes a flow path connecting a gas supply end portion and a gas discharge end portion, the gas supply end portion being in the metal member for supplying gas to the electrochemical cell, and the gas discharge end portion being in the metal member for discharging the gas from the electrochemical cell. The flow path includes: first flow paths through which the gas flows from the gas supply end portion to the gas discharge end portion in a first direction of a longitudinal direction of each first flow path, the first flow paths being arranged in a second direction perpendicular to a stacking direction and different from the first direction; and a second flow path between the gas supply end portion and the first flow paths, the second flow path being capable of supplying the gas from the gas supply end portion to the first flow paths.

## Description

### FIELD

Embodiments relate to a current collector and an electrochemical cell stack.

### BACKGROUND

A flat plate type solid oxide cell (SOC) is the smallest constitutional unit of a flat plate type solid oxide fuel cell (SOFC) and a solid oxide electrolysis cell (SOEC), and generally consists of three layers of a fuel electrode, an electrolyte, and an air electrode. The SOC achieves a sufficient reaction speed without the use of expensive precious metal catalysts because of its high operating temperature (600 to 1000 degrees Celsius). When the SOC is installed in the SOFC, a fuel gas (hydrogen, carbon monoxide, or the like) is supplied to the fuel electrode and air is supplied to the air electrode, and thereby electric energy is generated through an electrochemical reaction. The SOFC has been known for their high power generation efficiency compared to other types of fuel cells (such as solid polymer electrolyte fuel cells and phosphoric acid fuel cells). On the other hand, when the SOC is installed in the SOEC, a fuel gas (water vapor) is supplied to the fuel electrode and at the same time, electric energy is provided to the SOC, and thereby oxygen and hydrogen are generated from the water vapor through an electrolysis reaction. The SOEC has been known for their high efficiency compared to conventional water electrolysis methods. In addition, the use of a combination of SOFC and SOEC as a power storage system is also being considered.

### BRIEF DESCRIPTION OF THE DRAWINGS

FIG. 1 is a view of the overall configuration of an electrochemical cell stack 1 in this embodiment.
FIG. 2A is a cross-sectional view including air flow paths 5 and 6 of the electrochemical cell stack 1 in this embodiment, the cross-sectional view of the electrochemical cell stack 1 being seen from the P direction in FIG. 1.
FIG. 2B is a cross-sectional view including air flow paths 5 and 6 of the electrochemical cell stack 1 in this embodiment, the cross-sectional view of the electrochemical cell stack 1 being seen from the Q direction in FIG. 1.
FIG. 3A is a cross-sectional view including fuel gas flow paths 7 and 8 of the electrochemical cell stack 1 in this embodiment, the cross-sectional view of the electrochemical cell stack 1 being seen from the R direction in FIG. 1.
FIG. 3B is a cross-sectional view including fuel gas flow paths 7 and 8 of the electrochemical cell stack 1 in this embodiment, the cross-sectional view of the electrochemical cell stack 1 being seen from the S direction in FIG. 1.
FIG. 4A is an explanatory view illustrating a positional relationship of a metal member 20, a fuel electrode current collector 30, and a cell 10 when stacked sequentially, the explanatory view illustrating the case of only the metal member 20.
FIG. 4B is an explanatory view illustrating a positional relationship of a metal member 20, a fuel electrode current collector 30, and a cell 10 when stacked sequentially, the explanatory view illustrating the case where the fuel electrode current collector 30 is stacked on the metal member 20.
FIG. 4C is an explanatory view illustrating a positional relationship of a metal member 20, a fuel electrode current collector 30, and a cell 10 when stacked sequentially, the explanatory view illustrating the case where the cell 10 is stacked on the metal member 20 and the fuel electrode current collector 30.
FIG. 5A is an explanatory view illustrating a flow path structure 130 of the fuel electrode current collector 30 in this embodiment and a flow path structure 140 of an air electrode current collector 40 in this embodiment, the cross-sectional view of the electrochemical cell stack 1 being seen from the T direction in FIG. 2A and FIG. 2B.
FIG. 5B is an explanatory view illustrating a flow path structure 130 of the fuel electrode current collector 30 in this embodiment and a flow path structure 140 of an air electrode current collector 40 in this embodiment, the cross-sectional view of the electrochemical cell stack 1 being seen from the U direction in FIG. 3A and FIG. 3B.
FIG. 6A is an explanatory view illustrating the operation in the flow path structure 130 of the fuel electrode current collector 30 in this embodiment, the explanatory view illustrating a flow path structure 230 of a conventional fuel electrode current collector 200.
FIG. 6B is an explanatory view illustrating the operation in the flow path structure 130 of the fuel electrode current collector 30 in this embodiment, the explanatory view illustrating the flow path structure 130 of the fuel electrode current collector 30 in this embodiment.
FIG. 7A is an explanatory view illustrating the operation in the flow path structure 130 of the fuel electrode current collector 30 in this embodiment, the explanatory view illustrating flow analysis results when a second flow path 30b is set at various percentages.
FIG. 7B is an explanatory view illustrating the operation in the flow path structure 130 of the fuel electrode current collector 30 in this embodiment, the explanatory view illustrating a flow analysis result in a V region in FIG. 6B.

### DETAILED DESCRIPTION

Incidentally, the SOCs used in the SOFC and the SOEC are stacked to increase capacity, to form an SOC cell stack. For example, the SOCs are stacked with a conductive separator therebetween, to form an SOC cell stack. In order to improve the efficiency of the SOC cell stack, it is necessary to secure a flow path for uniformly supplying sufficient gas to the region (effective electrolysis region) that effectively contributes to the electrochemical reaction or electrolysis reaction. On the other hand, when the flow path is expanded excessively in order to supply sufficient gas uniformly, the contact area between the effective electrolysis region and surrounding members decreases, leading to a deterioration in current collection in some cases. In other words, the above may reduce the performance of the SOC cell stack.

The present invention has been made in consideration of such circumstances, and a problem to be solved by the present invention is to provide a current collector and an electrochemical cell stack having a flow path structure that ensures both uniform gas supply and current collection in an effective electrolysis region.

To achieve the above-described problem, a current collector in this embodiment includes: a flow path connecting a gas supply end portion and a gas discharge end portion, the gas supply end portion being provided in the metal member for supplying gas to the electrochemical cell, and the gas discharge end portion being provided in the metal member for discharging the gas from the electrochemical cell. The flow path includes: first flow paths through which the gas flows from the gas supply end portion to the gas discharge end portion in a first direction of a longitudinal direction of the each first flow path, the first flow path being arranged in a second direction perpendicular to a stacking direction and different from the first direction; and a second flow path between the gas supply end portion and the first flow paths, the second flow path being capable of supplying the gas to be supplied from the gas supply end portion to the first flow paths.

There will be explained in detail an electrochemical cell stack according to an embodiment of the present invention below with reference to the drawings. Incidentally, the following embodiment is an example of the embodiment of the present invention and is not intended to limit the scope of the invention. Further, in the drawings to be referred to in the embodiment, the same components or components having similar functions are denoted by the same or similar reference numerals and symbols, and explanations thereof are to be omitted in some cases. Further, the dimensional ratios of the drawings may differ from the actual ratios, and some components may be omitted from the drawings.

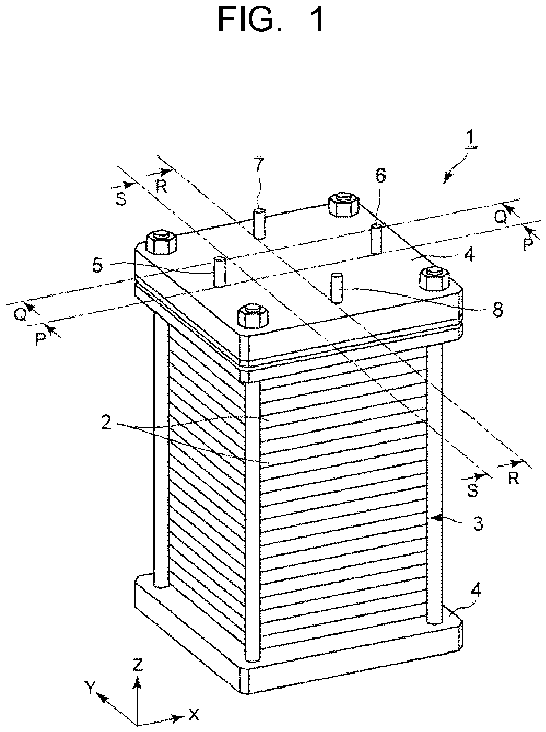

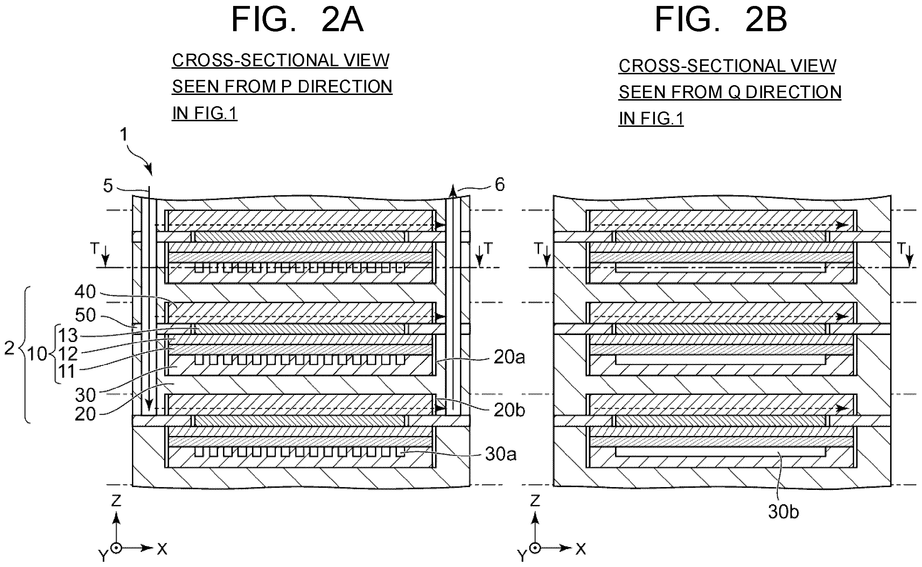

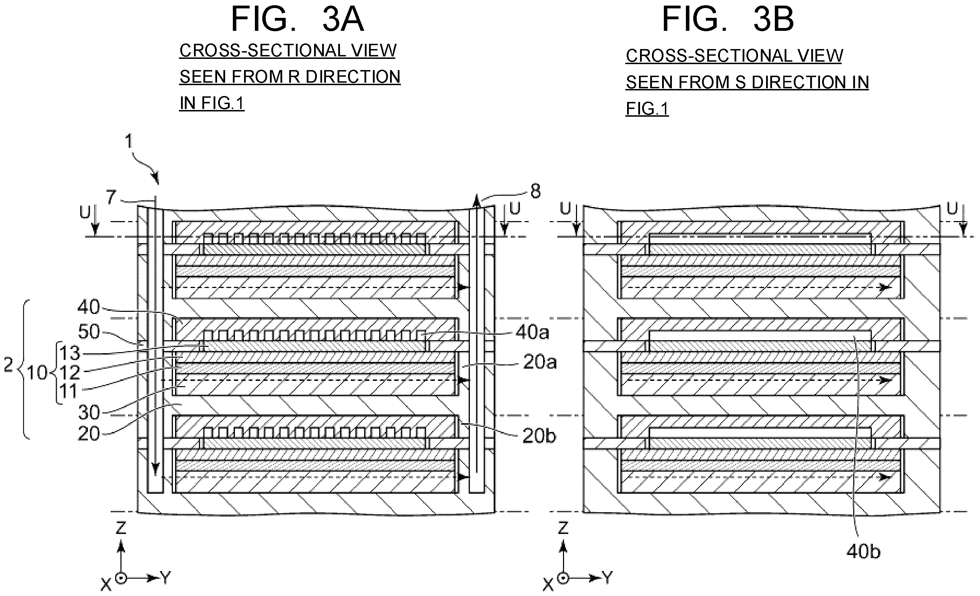

There is explained an electrochemical cell stack 1 in this embodiment while using FIG. 1, 2, 3A and 3B. FIG. 1 is a view of the overall configuration of the electrochemical cell stack 1 in this embodiment. FIG. 2A and FIG. 2B are cross-sectional views including air flow paths 5 and 6 of the electrochemical cell stack 1. FIG. 2A is a cross-sectional view of the electrochemical cell stack 1 seen from the P direction in FIG. 1. Further, FIG. 2B is a cross-sectional view of the electrochemical cell stack 1 seen from the Q direction in FIG. 1. FIG. 3A and FIG. 3B are cross-sectional views including fuel gas flow paths 7 and 8 of the electrochemical cell stack 1. FIG. 3Ais a cross-sectional view of the electrochemical cell stack 1 seen from the R direction in FIG. 1. Further, FIG. 3B is a cross-sectional view of the electrochemical cell stack 1 seen from the S direction.

In the following explanation, the electrochemical cell will be referred to as a cell, and the electrochemical cell stack will be referred to as a cell stack. Further, in the following explanation, the stacking direction refers to the direction in which cells 10 and metal bodies 20 to be described below are stacked (Z direction), and when describing this direction or a specific surface, it is described based on the stacking direction unless otherwise specified. For example, the upper surface refers to the upper surface based on the stacking direction, the side surface refers to the side surface based on the stacking direction, and the lower surface refers to the lower surface based on the stacking direction. The stacking direction mentioned here and the gravitational direction do not necessarily coincide.

As illustrated in FIG. 1, 2, 3A and 3B, the cell stack 1 includes cell units 2, each cell units 2 having the cell 10. The cell stack 1 is formed by pressing a stack 3, in which the cell units 2 are stacked, with end plates 4 from above and below. The cell unit 2 includes the cell 10, the metal member 20, a fuel electrode current collector 30, an air electrode current collector 40, and a separator 50.

The cell 10 is a flat plate type cell 10, in which a fuel electrode 11, an electrolyte 12, and an air electrode 13 are stacked. The cell 10 causes a chemical reaction by a fuel gas being supplied to the fuel electrode 11 and air being supplied to the air electrode 13. The chemical reaction mentioned here refers to an electrochemical reaction that generates electric energy when the cell 10 is used as an SOFC, and refers to an electrolysis reaction when the cell 10 is used as an SOEC. Further, the fuel gas mentioned here refers to hydrogen, carbon monoxide, or the like when used in the SOFC, and refers to water vapor when used in the SOEC. In this embodiment, although the case of the cell 10 in which the fuel electrode 11, the electrolyte 12, and the air electrode 13 are stacked in this order from the bottom is explained as an example, this embodiment is not limited to this case. In the cell 10, for example, the air electrode 13, the electrolyte 12, and the fuel electrode 11 may be stacked in this order from the bottom. In addition, for example, a fuel electrode porous substrate to be a support substrate of the cell 10 may be further used, and then, in the cell 10, the fuel electrode porous substrate, the fuel electrode 11, the electrolyte 12, and the air electrode 13 may be staked in this order from the bottom.

The metal member 20 houses the cell 10. As illustrated in FIG. 2A and FIG. 2B and FIG. 3A and FIG. 3B, the metal member 20 has cell housing parts 20a and 20b, each of the housing parts 20a and 20b is formed in made of a recess in a middle portion thereof. The cell 10 is housed in the housing parts 20a and 20b. The metal member 20 is a metal member that electrically connects the cells 10 and spatially separates the cells 10, and is made of a dense and conductive material. Examples of the dense and conductive material mentioned here include metals and ceramics, which are desirably ones having a thermal expansion coefficient close to that of the cell 10. As illustrated in FIG. 1 and FIG. 2A, in the metal member 20, the air flow paths 5 and 6 that serve as a flow path for air are provided on the portions facing each other across the cell 10 (portions facing each other in the X-axis direction in FIG. 1 and FIG. 2A). In this embodiment, the air flow path 5 indicates the air supply portion, and the air flow path 6 indicates the air discharge portion. Further, as illustrated in FIG. 1 and FIG. 3A, in the metal member 20, the fuel gas flow paths 7 and 8 that serve as a flow path for fuel gas are provided perpendicular to the line segment connecting the air flow paths 5 and 6 and on the portions facing each other across the cell 10 (portions facing each other in the Y-axis direction in FIG. 1 and FIG. 3A). In this embodiment, the fuel gas flow path 7 indicates the fuel gas supply portion, and the fuel gas flow path 8 indicates the fuel gas discharge portion. Examples of the metal member 20 mentioned here include a separator, a support material, and a combination of these.

The fuel electrode current collector 30 is provided between the fuel electrode 11 of the cell 10 and the cell housing part 20a of the metal member 20. The fuel electrode current collector 30 is made of an elastic conductive material. Examples of the conductive material mentioned here include a stainless steel material, iron, nickel, titanium, silver, platinum, copper, and alloy materials of these materials. In the fuel electrode current collector 30, a flow path connecting the fuel gas flow path 7 and the fuel gas flow path 8 is provided. Specifically, in the fuel electrode current collector 30, a first flow path 30a and a second flow path 30b that serve as the flow path for fuel gas are provided. The structures of the first flow path 30a and the second flow path 30b will be explained later. In this embodiment, there is explained, as an example, the case where the first flow path 30a and the second flow path 30b are provided in the fuel electrode current collector 30, but this embodiment is not limited to this case. For example, similar flow paths may be provided in the metal member 20. In such a further example, as long as sufficient contact between the cell 10 and the metal member 20 can be obtained, the fuel electrode current collector 30 may be omitted.

The air electrode current collector 40 is provided between the air electrode 13 of the cell 10 and the cell housing part 20b of the metal member 20. The air electrode current collector 40 is made of an elastic conductive material. Examples of the conductive material mentioned here include a stainless steel material, iron, nickel, titanium, silver, platinum, copper, and alloy materials of these materials. In the air electrode current collector 40, a flow path connecting the air flow path 5 and the air flow path 6 is provided. Specifically, in the air electrode current collector 40, a first flow path 40a and a second flow path 40b that serve as the flow path for air are provided. The structures of the first flow path 40a and the second flow path 40b will be explained later. In this embodiment, there is explained, as an example, the case where the first flow path 40a and the second flow path 40b are provided in the air electrode current collector 40, but this embodiment is not limited to this case. For example, similar flow paths may be provided in the metal member 20. In such a further example, as long as sufficient contact between the cell 10 and the metal member 20 can be obtained, the air electrode current collector 40 may be omitted.

The separator 50 is arranged on the upper surfaces of the electrolyte 12 of the cell 10 and the metal member 20. The separator 50 is made of an insulating and gas-sealing material, and seals the fuel electrode 11 and the air electrode 13 that form the same cell 10 to prevent gas leakage between them. As illustrated in FIG. 1 and FIG. 2A, in the separator 50, the air flow paths 5 and 6 that serve as the flow path for air are provided on the portions facing each other across the cell 10 (portions facing each other in the X-axis direction in FIG. 1 and FIG. 2A). Further, as illustrated in FIG. 1 and FIG. 3A, in the separator 50, the fuel gas flow paths 7 and 8 that serve as the flow path for fuel gas are provided perpendicular to the line segment connecting the air flow paths 5 and 6 and on the portions facing each other across the cell 10 (portions facing each other in the Y-axis direction in FIG. 1 and FIG. 3A).

An arbitrary number of cell units 2 having such a structure as above are stacked, and thereby the stack 3 is formed. The end plates 4 are arranged at both end portions (an upper end portion and a lower end portion in FIG. 1) of the stack 3 in the stacking direction. Then, the end plates 4 are fixed to the stack 3 by a press mechanism that presses them from both sides, by fastening members such as bolts and nuts (not illustrated), or another means, and thereby the cell stack 1 is formed.

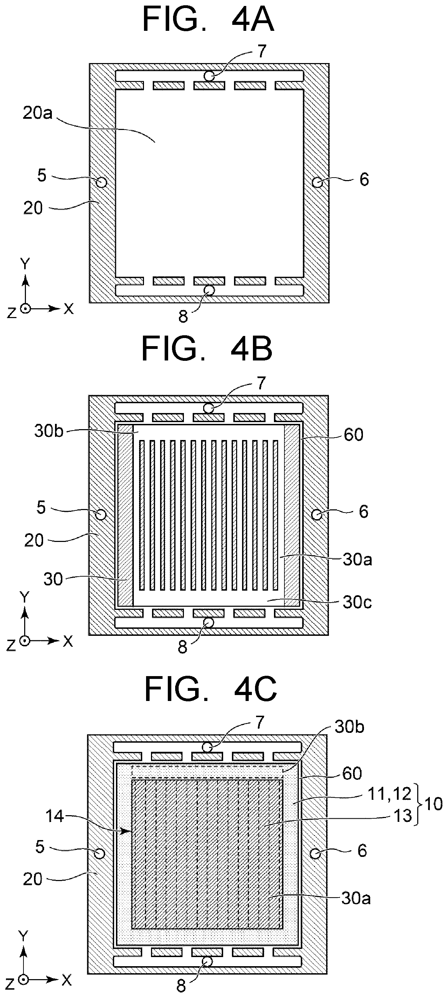

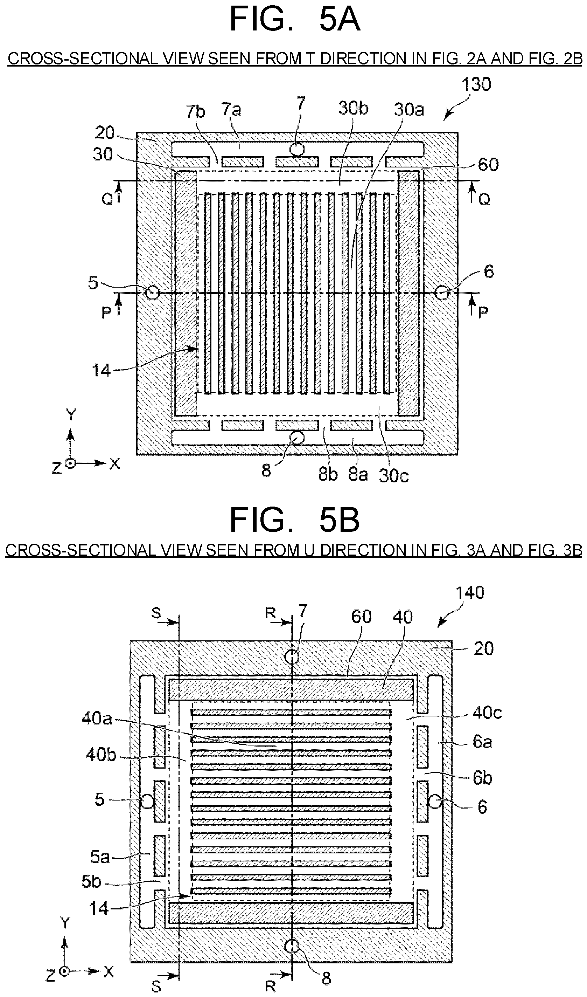

Next, the fuel electrode current collector 30 and the air electrode current collector 40 are further explained while using FIG. 4A, FIG. 4B, and FIG. 4C and FIG. 5A and FIG. 5B. FIG. 4A, FIG. 4B, and FIG. 4C are explanatory views illustrating a positional relationship of the metal member 20, the fuel electrode current collector 30, and the cell 10 when stacked sequentially. FIG. 4A is an explanatory view illustrating the case of only the metal member 20. Further, FIG. 4B is an explanatory view illustrating the case where the fuel electrode current collector 30 is stacked on the metal member 20, and FIG. 4C is an explanatory view illustrating the case where the cell 10 is stacked on the metal member 20 and the fuel electrode current collector 30. FIG. 5A and FIG. 5B are explanatory views illustrating the flow path structure 130 of the fuel electrode current collector 30 in this embodiment and the flow path structure 140 of the air electrode current collector 40 in this embodiment. FIG. 5A is a cross-sectional view of the cell stack 1 seen from the T direction in FIG. 2A and FIG. 2B. Further, FIG. 5B is a cross-sectional view of the cell stack 1 seen from the U direction in FIG. 3A and FIG. 3B. In FIG. 4A, FIG. 4B, and FIG. 4C, only the case of the fuel electrode current collector 30 is explained, but the same is true of the case of the air electrode current collector 40. Further, in FIG. 5A, positions corresponding to the above-described P direction and Q direction are illustrated, and in FIG. 5B, positions corresponding to the above-described R direction and S direction are illustrated.

First, the positional relationship when the metal member 20, the fuel electrode current collector 30, and the cell 10 are stacked sequentially is explained while using FIG. 4A, FIG. 4B, and FIG. 4C. As illustrated in FIG. 4A, there is the metal member 20 including the housing part 20a. As illustrated in FIG. 4B, the fuel electrode current collector 30 is stacked above the housing part 20a of the metal member 20. As illustrated in FIG. 4C, the cell 10 is stacked above the housing part 20a of the metal member 20 and above the fuel electrode current collector 30. At this time, the air electrode 13 that forms the cell 10 is configured to have a smaller area than the fuel electrode 11 and the electrolyte 12 that form the cell 10 similarly. Then, the region where the fuel electrode 11 and the electrolyte 12 overlap with the air electrode 13 is formed as an effective electrolysis region 14 where a chemical reaction occurs when the fuel gas and the air are supplied to the fuel electrode 11 and the air electrode 13, respectively. That is, the effective electrolysis region 14 is the region where the fuel electrode 11, the electrolyte 12, and the air electrode 13 overlap in the stacking direction (Z direction), and refers to the region where the fuel gas to be supplied to the fuel electrode 11 and the air to be supplied to the air electrode 13 cause a chemical reaction. As illustrated in FIG. 4C, in the region where the effective electrolysis region 14 and the fuel electrode current collector 30 overlap, the flow path that is provided to extend in the fuel gas flow direction (Y direction) is the first flow path 30a. Further, as illustrated in FIG. 4C, in the region where the effective electrolysis region 14 and the fuel electrode current collector 30 do not overlap, the flow path that is provided to extend in a direction (X direction) perpendicular to the fuel gas flow direction (Y direction) and the stacking direction (Z direction) is the second flow path 30b.

Next, the flow path structures of the fuel electrode current collector 30 and the air electrode current collector 40 are explained while using FIG. 5A and FIG. 5B. As illustrated in FIG. 5A, the flow path structure 130 of the fuel electrode current collector 30 includes the first flow path 30a, the second flow path 30b, and a third flow path 30c. These flow paths extend in a direction perpendicular to the stacking direction (Z direction) so as to connect the fuel gas flow path 7 and the fuel gas flow path 8. That is, they extend in the Y direction so as to connect the fuel gas flow path 7 and the fuel gas flow path 8. Further, when the fuel electrode current collector 30 is installed on the metal member 20 as illustrated in FIG. 5A, a gap region 60 is made. This gap region 60 is preferably made as small as possible to reduce the fuel gas that enters the gap region 60 rather than the first flow paths 30a. Further, as illustrated in FIG. 5A, fuel gas flow paths 7a and 7b or fuel gas flow paths 8a and 8b are provided at the metal member 20 between the fuel gas flow path 7 or the fuel gas flow path 8 and the flow path structure 130 of the fuel electrode current collector 30. In this embodiment, the case where four fuel gas flow paths 7b and four fuel gas flow paths 8b are provided at the metal member 20 is explained as an example, but this embodiment is not intended to be limited to this case.

The first flow path 30a is formed with a first direction, which is a direction in which the fuel gas (corresponding to gas) flows from the fuel gas flow path 7 (corresponding to a gas supply end portion) to the fuel gas flow path 8 (corresponding to a gas discharge end portion) (Y direction), set as its longitudinal direction. The first flow paths 30a are provided at intervals in a direction perpendicular to the stacking direction (Z direction) and in a second direction, which is different from the first direction. The first flow paths 30a are provided in at least of the effective electrolysis region 14 of the fuel electrode current collector 30 in order to supply the fuel gas (corresponding to gas) to be supplied to the first flow paths 30a to the effective electrolysis region 14 of the fuel electrode 11. In this embodiment, there is explained, as an example, the case where the first flow paths 30a are provided at intervals in a direction (X direction) perpendicular to both the stacking direction (Z direction) and the first direction (Y direction) in the range of the effective electrolysis region 14. In this embodiment, there is explained, as an example, the case where the first flow path 30a is linear, but this embodiment is not limited to this case. For example, the first flow path 30a may be curved or lightning shaped.

The second flow path 30b is provided between the fuel gas flow path 7 (corresponding to the gas supply end portion) and the first flow paths 30a. The second flow path 30b is provided in order to supply the fuel gas (corresponding to gas) to be supplied from the fuel gas flow path 7 (corresponding to the gas supply end portion) to the first flow paths 30a. That is, the second flow path 30b is provided in the range from the fuel gas flow path 7 (corresponding to the gas supply end portion) to the effective electrolysis region 14 in the fuel electrode current collector 30 in order to diffuse the fuel gas (corresponding to gas) to be supplied from the fuel gas flow path 7 (corresponding to the gas supply end portion) to the second flow path 30b in the second direction. In this embodiment, there is explained, as an example, the case where the second flow path 30b is formed in the range from the fuel gas flow path 7 (corresponding to the gas supply end portion) to the effective electrolysis region 14, with the direction (X direction) perpendicular to both the stacking direction (Z direction) and the first direction (Y direction) set as its longitudinal direction. At this time, it is desirable that the length of the second flow path 30b in the first direction (Y direction) should be at least 3% of the length of the effective electrolysis region 14 in the first direction (Y direction). Details of this will be explained later. In this embodiment, there is explained, as an example, the case where the second flow path 30b has a rectangular structure, but this embodiment is not limited to this. For example, the second flow path 30b may have a trapezoidal structure or an arch-shaped structure to the extent that the fuel gas can be diffused.

The third flow path 30c is provided between the fuel gas flow path 8 (corresponding to the gas discharge end portion) and the first flow paths 30a. The third flow path 30c is provided in order to discharge the fuel gas (corresponding to gas) to be supplied from the first flow paths 30a to the fuel gas flow path 8 (corresponding to the gas discharge end portion). That is, the third flow path 30c is provided in the range from the end portion close to the fuel gas flow path 8 (corresponding to the gas discharge end portion) to the effective electrolysis region 14 in the fuel electrode current collector 30 in order to merge the fuel gases (corresponding to gas) to be supplied from the first flow paths 30a to the third flow path 30c in the second direction. In this embodiment, there is explained, as an example, the case where the third flow path 30c is formed in the range from the fuel gas flow path 8 (corresponding to the gas discharge end portion) to the effective electrolysis region 14, with the direction (X direction) perpendicular to both the stacking direction (Z direction) and the first direction (Y direction) set as its longitudinal direction. In this embodiment, there is explained, as an example, the case where the third flow path 30c has a rectangular structure, but this embodiment is not limited to this. For example, the third flow path 30c may have a trapezoidal structure or an arch-shaped structure to the extent that the fuel gases can be merged. Further, in this embodiment, there is explained, as an example, the structure in which the third flow path 30c is provided, but for example, a structure in which the first flow paths 30a are provided up to the fuel gas flow path 8 without providing the third flow path 30c may also be used.

As illustrated in FIG. 5B, the flow path structure 140 of the air electrode current collector 40 includes the first flow path 40a, the second flow path 40b, and the third flow path 40c. These flow paths extend in a direction perpendicular to the stacking direction (Z direction) so as to connect the air flow path 5 and the air flow path 6. That is, they extend in the X direction so as to connect the air flow path 5 and the air flow path 6. Further, when the air electrode current collector 40 is installed on the metal member 20 as illustrated in FIG. 5B, a gap region 60 is made. This gap region 60 is preferably made as small as possible to reduce the fuel gas that enters the gap region 60 rather than the first flow paths 30a. Further, as illustrated in FIG. 5B, between the air flow path 5 or the air flow path 6 and the flow path structure 140 of the air electrode current collector 40, air flow paths 5a and 5b or air flow paths 6a and 6b are provided at the metal member 20. In this embodiment, the case where four air flow paths 5b and four air flow paths 6b are provided at the metal member 20 is explained as an example, but this embodiment is not intended to be limited to this case.

The first flow path 40a allows the air (corresponding to gas) to flow from the air flow path 5 (corresponding to a gas supply end portion) to the air flow path 6 (corresponding to a gas discharge end portion) in the first direction (X direction), the first direction being the longitudinal direction of the first flow path 40a. The first flow paths 40a are provided at intervals in the second direction perpendicular to the stacking direction (Z direction) and different from the first direction. The first flow paths 40a are provided within at least the range of the effective electrolysis region 14 of the air electrode current collector 40 in order to supply the air (corresponding to gas) to be supplied to the first flow paths 40a to the effective electrolysis region 14 of the air electrode 13. In this embodiment, there is explained, as an example, the case where the first flow paths 40a are provided at intervals in a direction (Y direction) perpendicular to both the stacking direction (Z direction) and the first direction (X direction) in the range of the effective electrolysis region 14. In this embodiment, the case where the first flow path 40a is linear is explained as an example, but this embodiment is not limited to this case. For example, the first flow path 40a may be curved or lightning shaped.

The second flow path 40b is provided between the air flow path 5 (corresponding to the gas supply end portion) and the first flow paths 40a. The second flow path 40b is provided in order to supply the air (corresponding to gas) to be supplied from the air flow path 5 (corresponding to the gas supply end portion) to the first flow paths 40a. That is, the second flow path 40b is provided in the range from the air flow path 5 (corresponding to the gas supply end portion) to the effective electrolysis region 14 in the air electrode current collector 40 in order to diffuse the air (corresponding to gas) to be supplied from the air flow path 5 (corresponding to the gas supply end portion) to the second flow path 40b in the second direction. In this embodiment, there is explained, as an example, the case where the second flow path 40b is formed in the range from the air flow path 5 (corresponding to the gas supply end portion) to the effective electrolysis region 14, with the direction (Y direction) perpendicular to both the stacking direction (Z direction) and the first direction (X direction) set as its longitudinal direction. At this time, it is desirable that the length of the second flow path 40b in the first direction (X direction) should be at least 3% of the length of the effective electrolysis region 14 in the first direction (X direction). Details of this will be explained later. In this embodiment, there is explained, as an example, the case where the second flow path 40b has a rectangular structure, but this embodiment is not limited to this. For example, the second flow path 40b may have a trapezoidal structure or an arch-shaped structure to the extent that the air can be diffused.

The third flow path 40c is provided between the air flow path 6 (corresponding to the gas discharge end portion) and the first flow paths 40a. The third flow path 40c is provided in order to discharge the air (corresponding to gas) to be supplied from the first flow paths 40a to the air flow path 6 (corresponding to the gas discharge end portion). That is, the third flow path 40c is provided in the range from the end portion of the air flow path 6 side (corresponding to the gas discharge end portion) to the effective electrolysis region 14 in the air electrode current collector 40 in order to merge the airs (corresponding to gas) to be supplied from the first flow paths 40a to the third flow path 40c in the second direction. In this embodiment, there is explained, as an example, the case where the third flow path 40c is formed in the range from the air flow path 6 (corresponding to the gas discharge end portion) to the effective electrolysis region 14, with the direction (Y direction) perpendicular to both the stacking direction (Z direction) and the first direction (X direction) set as its longitudinal direction. In this embodiment, there is explained, as an example, the case where the third flow path 40c has a rectangular structure, but this embodiment is not limited to this. For example, the third flow path 40c may have a trapezoidal structure or an arch-shaped structure to the extent that the airs can be merged. Further, in this embodiment, there is explained, as an example, the structure in which the third flow path 40c is provided, but for example, a structure in which the first flow paths 40a are provided up to the air flow path 6 without providing the third flow path 40c may also be used.

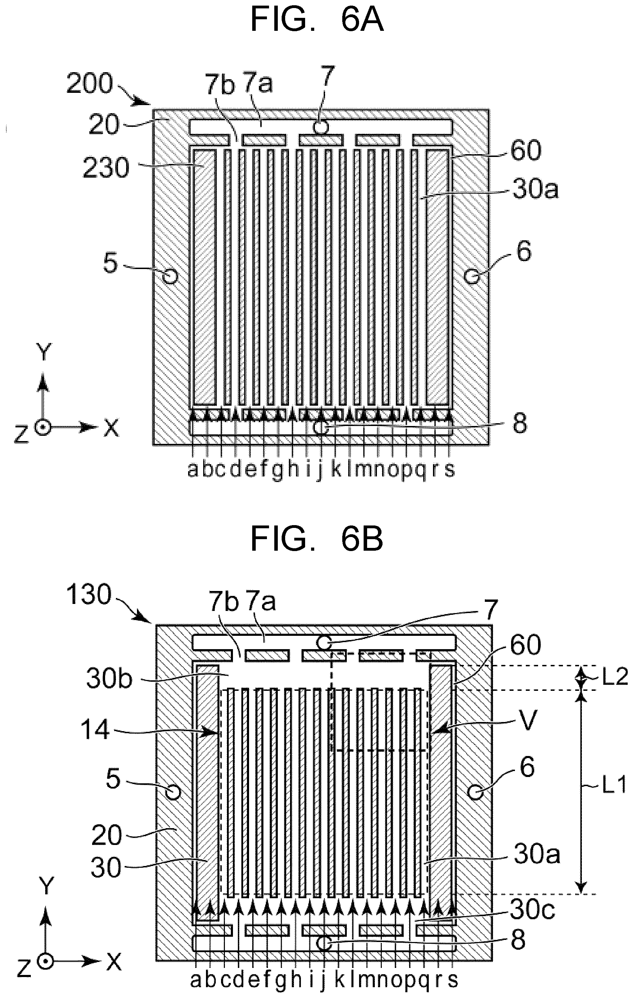

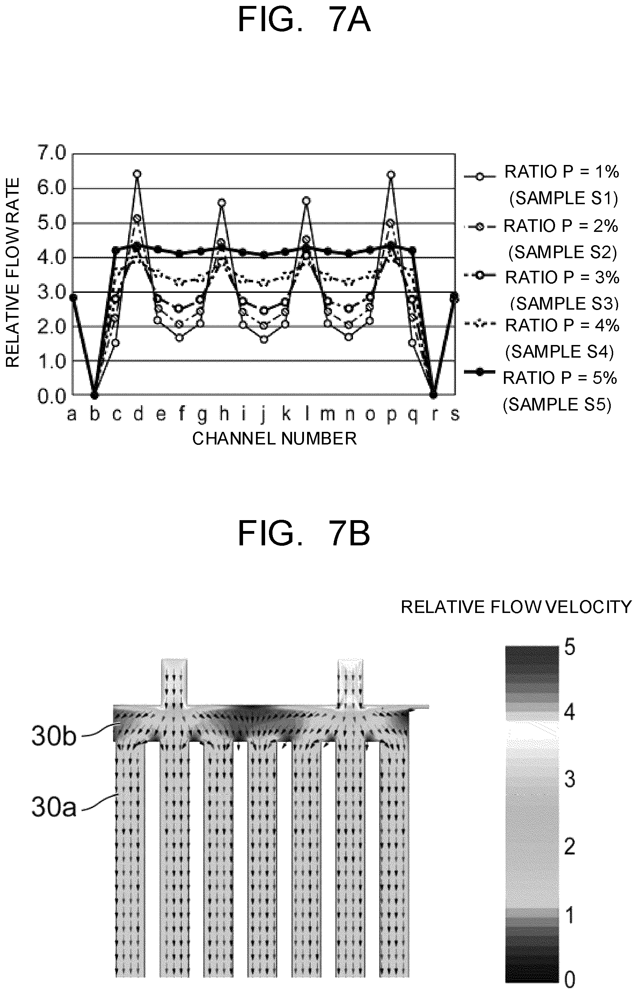

Next, there is explained the operation in the flow path structure 130 of the fuel electrode current collector 30 while using FIG. 6A, 6B, 7A and 7B. FIG. 6A, 6B, 7A and 7B are explanatory views illustrating the operation in the flow path structure 130 of the fuel electrode current collector 30 in this embodiment, FIG. 6Ais an explanatory view illustrating a flow path structure 230 of a conventional fuel electrode current collector 200, and FIG. 6B is an explanatory view illustrating the flow path structure 130 of the fuel electrode current collector 30 in this embodiment. Further, FIG. 7A is an explanatory view illustrating flow analysis results when the second flow path 30b is set at various percentages with the ratio of the length of the second flow path 30b in the first direction (Y direction) to the length of the effective electrolysis region 14 in the first direction (Y direction) set as a parameter, and FIG. 7B is an explanatory view illustrating a flow analysis result in a V region in FIG. 6B. Although only the operation in the flow path structure 130 of the fuel electrode current collector 30 is explained below, the same is true of the flow path structure 140 of the air electrode current collector 40.

First, how to view FIG. 7A and FIG. 7B is explained. The horizontal axis in FIG. 7A indicates a channel number. The channel numbers mentioned here correspond to the alphabetic symbols from a through s given to respective flow paths in FIG. 6A and FIG. 6B. Specifically, the symbols a and s indicate the gap region 60 to be generated when the fuel electrode current collector 30 is installed on the metal member 20. Further, the symbols b and r indicate flow paths filled with the fuel electrode current collector 30. Further, Symbols c to q indicate the first flow paths 30a. The vertical axis in FIG. 7A indicates the relative flow rate of the fuel gas flowing through the flow path corresponding to each symbol. In the following explanation, only numerical values are described for the relative flow rate. FIG. 7A illustrates five data samples of Sample S1 to Sample S5. Specifically, the ratio of a length L2 (see FIG. 6B) of the second flow path 30b in the first direction (Y direction) to a length L1 (see FIG. 6B) of the effective electrolysis region 14 in the first direction (Y direction) (to be referred to as a ratio P hereinafter) is used as a parameter, and the flow analysis results when the ratio P is set to each value from 1% to 5% are illustrated. In FIG. 7B, the flows of the fuel gas in the region V in FIG. 6B are illustrated by arrows, and the relative flow velocity of the fuel gas is illustrated with gradation. The dark gradation portion illustrated in FIG. 7B is dark gradation that corresponds to the relative flow velocity closer to 0. Further, the numerical values to appear in the following explanation are values based on a not-illustrated data table and are values rounded to one decimal place. For example, 1.01 is described as about 1.0.

Here, in order to more clearly clarify the difference between this embodiment and the conventional technique, the flow path structure 230 of the conventional fuel electrode current collector 200 is explained as a comparative example, and then the flow path structure 130 of the fuel electrode current collector 30 in this embodiment is explained.

### (Operation of the comparative example)

As illustrated in FIG. 6A, in the flow path structure 230 of the conventional fuel electrode current collector 200, flow paths formed with the Y direction set as their longitudinal direction for connecting the fuel gas flow path 7 and the fuel gas flow path 8 are provided at intervals in the X direction. That is, in the flow path structure 230 of the conventional fuel electrode current collector 200, only the flow paths corresponding to the first flow paths 30a in the flow path structure 130 of the fuel electrode current collector 30 in this embodiment are provided.

The flow analysis results of the fuel gas in the flow path structure 230 of the conventional fuel electrode current collector 200 are explained while using FIG. 7A. Here, Sample S1 in FIG. 7A (the case where the ratio P is 1%) corresponds to the case of the flow path structure 230 of the conventional fuel electrode current collector 200. As illustrated in Sample S1 in FIG. 6 (c), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 1.5 to about 6.4. As illustrated in FIG. 6A, in particular, the flow paths corresponding to Symbols d, h, l, and p among Symbols c to q are located relatively close to the respective fuel gas flow paths 7b. Therefore, as illustrated in FIG. 7A, the relative flow rates of the fuel gas flowing through the flow paths corresponding to Symbols d, h, l, and p are relatively high. On the other hand, as illustrated in FIG. 6A, the flow paths corresponding to Symbols f, j, and n among Symbols c to q are located relatively far from the respective fuel gas flow paths 7b. Therefore, as illustrated in FIG. 7A, the relative flow rates of the fuel gas flowing through the flow paths corresponding to Symbols f, j, and n are relatively low. Specifically, when focusing on the ratio of the minimum value to the maximum value of the relative flow rates of the fuel gases flowing through the respective flow paths corresponding to Symbols c to q (to be referred to as a ratio Q hereinafter), the ratio Q of the minimum value (1.5) to the maximum value (6.4) is about 23.3%. As above, in the case of the flow path structure 230 as in the conventional fuel electrode current collector 200, the fuel gas does not easily diffuse in the X direction when the fuel gas is supplied from the fuel gas flow path 7 to the flow paths corresponding to the respective first flow paths 30a. As a result, the fuel gas did not flow at a uniform relative flow rate through the respective flow paths (Symbols c to q) corresponding to the first flow paths 30a in some cases.

### (Operation in this embodiment)

In contrast to this, as illustrated in FIG. 6B, in the flow path structure 130 of the fuel electrode current collector 30 in this embodiment, the first flow paths 30a and the second flow path 30b that is located between the fuel gas flow path 7 and the first flow paths 30a are provided. That is, in the flow path structure 230 of the conventional fuel electrode current collector 200, only the flow paths corresponding to the first flow paths 30a are provided, whereas in the flow path structure 130 of the fuel electrode current collector 30 in this embodiment, the second flow path 30b is further provided between the fuel gas flow path 7 and the first flow paths 30a. In this embodiment, as illustrated in FIG. 6B, the case where the second direction is the direction (X direction) perpendicular to both the stacking direction (Z direction) and the first direction (Y direction) is explained as an example.

The flow analysis results of the fuel gas in the case of employing the flow path structure 130 of the fuel electrode current collector 30 in this embodiment are explained while using FIG. 7A. As illustrated in FIG. 7A, in employing the flow path structure 130 of the fuel electrode current collector 30 in this embodiment, the inventor performed flow analysis in the case where the ratio P was set to the respective values from 1% to 5% (Samples S1 to S5). Then, based on the flow analysis results, the inventor verified the threshold value of the ratio P at which the second flow path 30b exhibits the effect of diffusing the fuel gas in the X direction. The case where the ratio P is 1% (Sample S1) corresponds to the case where the flow path structure 230 of the conventional fuel electrode current collector 200 is used.

As illustrated in Sample S1 (the case where the ratio P is 1%), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 1.5 to about 6.4.

Further, as illustrated in Sample S2 (the case where the ratio P is 2%), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 2.0 to about 5.2.

Further, as illustrated in Sample S3 (the case where the ratio P is 3%), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 2.5 to about 4.3.

Further, as illustrated in Sample S4 (the case where the ratio P is 4%), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 3.3 to about 4.0.

Further, as illustrated in Sample S5 (the case where the ratio P is 5%), in the flow paths corresponding to Symbols a and s, the relative flow rate is about 2.8, in the flow paths corresponding to Symbols b and r, the relative flow rate is about 0.0, and in the flow paths corresponding to Symbols c to q, the relative flow rate varies from about 4.1 to about 4.4.

In particular, in all of Samples S1 to S5, as illustrated in FIG. 6B, the flow paths corresponding to Symbols d, h, l, and p among Symbols c to q are provided at positions relatively close to the respective fuel gas flow paths 7b. Therefore, as illustrated in FIG. 7A, the relative flow rates of the fuel gases flowing through the flow paths corresponding to Symbols d, h, l, and p are relatively high. On the other hand, as illustrated in FIG. 6B, the flow paths corresponding to Symbols f, j, and n among Symbols c to q are provided at positions relatively far from the respective fuel gas flow paths 7b. Therefore, as illustrated in FIG. 7A, the relative flow rates of the fuel gases flowing through the flow paths corresponding to Symbols f, j, and n are relatively low.

In this relationship, as the value of the ratio P increases (as the ratio P increases from 1% to 5%), the variations in the relative flow rates of the fuel gases flowing through the flow paths corresponding to Symbols c to q decrease. That is, as the value of the ratio P increases (as the ratio P increases from 1% to 5%), the fuel gas is diffused in the X direction by the second flow path 30b to be supplied to the respective first flow paths 30a.

Based on these results, the inventor verified the threshold value of the ratio P at which the second flow path 30b exhibits the effect of diffusing the fuel gas. At this time, the inventor focused on the ratio Q of the minimum value to the maximum value of the relative flow rates of the fuel gases flowing through the respective flow paths corresponding to Symbols c to q.

As illustrated in Sample S1, the maximum value of the relative flow rates of the fuel gases flowing through the respective flow paths corresponding to Symbols c to q is about 6.4, and the minimum value is about 1.5. In other words, the ratio Q of the minimum value to the maximum value is about 23.3%.

Further, as illustrated in Sample S2, the maximum value of the relative flow rates of the fuel gases flowing through the respective flow paths corresponding to Symbols c to q is about 5.2, and the minimum value is about 2.0. In other words, the ratio Q of the minimum value to the maximum value is about 38.9%.

Further, as illustrated in Sample S3, the maximum value of the relative flow rates of the fuel gases flowing through the respective flow paths corresponding to Symbols c to q is about 4.3, and the minimum value is about 2.5. In other words, the ratio Q of the minimum value to the maximum value is about 57.2%.

Further, as illustrated in Sample S4, the maximum value of the relative flow rates of the fuel gases flowing through the respective flow paths corresponding to Symbols c to q is about 4.0, and the minimum value is about 3.3. In other words, the ratio Q of the minimum value to the maximum value is about 81.8%.

Further, as illustrated in Sample S5, the maximum value of the relative flow rates of the fuel gases flowing through the respective flow paths corresponding to Symbols c to q is about 4.4, and the minimum value is about 4.1. In other words, the ratio Q of the minimum value to the maximum value is about 93.3%.

Based on the above results, the inventor determined that when the ratio Q of the minimum value to the maximum value of the relative flow rates of the fuel gases flowing through the respective flow paths corresponding to Symbols c to q is 50% or more, the second flow path 30b exhibits the effect of diffusing the fuel gas. That is, the inventor determined the cases of Samples S3 to S5 to be the case where the second flow path 30b exhibits the effect of diffusing the fuel gas. This is because, when the ratio Q does not exceed 50%, the variations in the relative flow rates of the flow paths corresponding to Symbols c to q that form the second flow path 30b are equal to or more than twice as large, making it difficult to say that the second flow path 30b operates to achieve the purpose of diffusing the fuel gas to promote more uniform power generation in the effective electrolysis region 14. On the other hand, when the ratio Q exceeds 50%, the variations in the relative flow rates of the flow paths corresponding to Symbols c to q that form the second flow path 30b are maintained to be less than twice as large, and the inventor determined that the second flow path 30b at least operates to achieve the purpose. Therefore, the inventor determined that it is preferable for the second flow path 30b to be provided in the range from the fuel gas flow path 7 to the effective electrolysis region 14 of the fuel electrode current collector 30 to the extent that the ratio P of the length L2 of the second flow path 30b in the first direction (Y direction) to the length L 1 of the effective electrolysis region 14 in the first direction (Y direction) satisfies at least 3%.

Further, FIG. 7B illustrates the flow analysis results when the second flow path 30b is provided so as to make the fuel gases flow through the respective first flow paths 30a at a uniform relative flow rate, as in the case of Sample S5. As illustrated in FIG. 7B, by providing the second flow path 30b, the fuel gas diffuses through the second flow path 30b as indicated by the arrows, and flows through the respective first flow paths 30a at a uniform relative flow velocity as indicated by gradation.

As above, according to this embodiment, the fuel gas and the air are diffused by the second flow path 30b and the second flow path 40b, and then supplied to the respective first flow paths 30a and the respective first flow paths 40a. As a result, it becomes possible to uniformly supply gas to the effective electrolysis region 14 of the cell 10 while maintaining current collection.

In this embodiment, the case where the second flow path 30b and the second flow path 40b, and the third flow path 30c and the third flow path 40c each do not have a support structure is explained as an example, but this embodiment is not limited to this case. For example, in the region where the relative flow velocity is relatively small (see FIG. 7B) of the second flow path 30b and the second flow path 40b, and the third flow path 30c and the third flow path 40c, a support structure for supporting the cell stack 1 may be provided. Even in the case of such a further example, the same operation and effect can be exhibited.

Further, in this embodiment, the case where the flow path structure in this embodiment is applied to both the fuel electrode current collector 30 and the air electrode current collector 40 is explained as an example, but this embodiment is not limited to this. For example, the flow path structure in this embodiment may be applied to either the fuel electrode current collector 30 or the air electrode current collector 40 depending on the application.

Further, in this embodiment, the case where the air flow paths 5 and 6 and the fuel gas flow paths 7 and 8 are each provided one by one in the metal member 20 and the separator 50 is explained as an example, but this embodiment is not limited to this case. For example, the air flow paths 5 and the air flow paths 6, and the fuel gas flow paths 7 and the fuel gas flow paths 8 may be provided.

While certain embodiments of the present invention have been described, these embodiments have been presented by way of example only, and are not intended to limit the scope of the inventions. Indeed, the novel methods described herein may be embodied in a variety of other forms; furthermore, various omissions, substitutions and changes in the form of the methods described herein may be made without departing from the spirit of the inventions. The accompanying claims and their equivalents are intended to cover such forms or modifications as would fall within the scope and spirit of the inventions.

## Claims

1. A current collector provided between a metal member and an electrochemical cell in which a fuel electrode, an electrolyte and an air electrode are stacked,
the current collector comprising:
a flow path connecting a gas supply end portion and a gas discharge end portion, the gas supply end portion being provided in the metal member for supplying gas to the electrochemical cell, and the gas discharge end portion being provided in the metal member for discharging the gas from the electrochemical cell, wherein
the flow path includes:
first flow paths through which the gas flows from the gas supply end portion to the gas discharge end portion in a first direction of a longitudinal direction of each first flow path, the first flow paths being arranged in a second direction perpendicular to a stacking direction and different from the first direction; and
a second flow path between the gas supply end portion and the first flow paths, the second flow path being capable of supplying the gas to be supplied from the gas supply end portion to the first flow paths.

2. The current collector according to claim 1, wherein
the first flow paths are provided in at least an effective electrolysis region where the fuel electrode, the electrolyte, and the air electrode overlap in the stacking direction.

3. The current collector according to claim 1, wherein
the length of the second flow path in the first direction is at least 3% of the length of the effective electrolysis region in the first direction, the effective electrolysis region being a region where the fuel electrode, the electrolyte, and the air electrode overlap in the stacking direction.

4. The current collector according to claim 1, wherein
the second flow path includes a support structure supporting the electrochemical cell and the metal member.

5. The current collector according to claim 1, further comprising:
a third flow path between the gas discharge end portion and the first flow paths, the flow path being capable of discharging the gases to be supplied from the first flow paths to the gas discharge end portion.

6. The current collector according to claim 5, wherein
the third flow path includes a support structure supporting the electrochemical cell and the metal member.

7. An electrochemical cell stack, comprising:
an electrochemical cell in which a fuel electrode, an electrolyte and an air electrode are stacked;
a metal member in which the electrochemical cell is housed;
a fuel electrode current collector provided between the fuel electrode and the metal member in a stacking direction; and
an air electrode current collector provided between the air electrode and the metal member in the stacking direction, wherein
at least one current collector selected from the group consisting of the fuel electrode current collector and the air electrode current collector is the current collector according to any one of claims 1 to 6.
